# EUROPEAN PATENT APPLICATION

(11) **EP 4 564 819 A1**
(43) Date of publication of application: **04.06.2025**
(21) Application number: 23307419.4
(22) Date of filing: 29.12.2023
(51) Int. Cl.: H04N 19/46, H04N 19/597, H04N 19/70

(54) **DEPTH SINGLE-LAYER ENCODING/DECODING**

(30) Priority: 28.11.2023 EP 23307069
(71) Applicant: Beijing Xiaomi Mobile Software Co., Ltd., Beijing 100085 (CN)
(72) Inventor: THOMAS, EMMANUEL, 2611WD Delft (NL); Potetsianakis, Emmanouil, 2563 TZ The Hague (NL); Alexiou, Evangelos, 1018LG Amsterdam (NL)
(74) Representative: RVDB Rennes

(57) **Abstract**

The present disclosure relates to a method (200) of decoding depth image sequence from a single-layer bitstream, wherein the method comprises:
- decoding (210) a depth map sequence from the single-layer bitstream; and
- decoding (220) from the single-layer bitstream, depth representation information defining information used to obtain depth image sequence based on decoded depth map sequence.

## Description

### FIELD

The present disclosure generally relates to encoding and decoding of depth information of video pictures.

### BACKGROUND

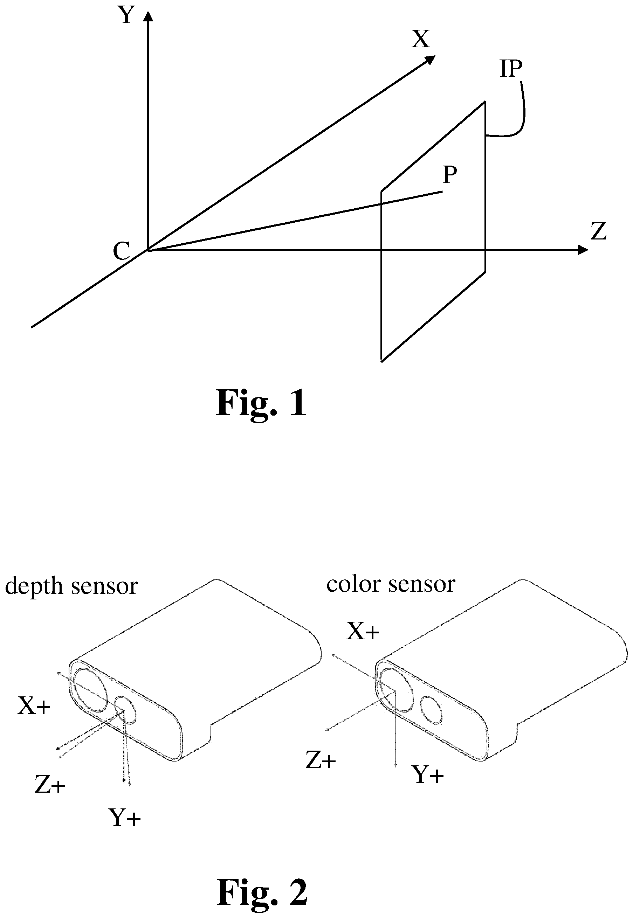

Depth information of video pictures may follow different conventions but it typically represents the distance from a specific point, normally associated with some type of sensor device, to a point P in a scene (point of a depth image plane IP) along a direction given by a principal z-axis as illustrated on **Figure 1** (L. Xia, C. -C. Chen and J. K. Aggarwal, "Human detection using depth information by Kinect," CVPR 2011 WORKSHOPS, Colorado Springs, CO, USA, 2011, pp. 15-22, doi: 10.1109/CVPRW.2011.5981811, https://cvrc.ece.utexas.edu/Publications/HAU3D11_Xia.pdf).

The process of sensing depth in a scene is known as range imaging. Range imaging is the name for a collection of techniques that are used to produce a depth image (2D image) (or depth image sequence comprising at least one depth image) showing the distances to points in a scene from a specific point, normally associated with some type of sensor device. For example the specific point is a center of a focal plane of the sensor device. The resulting depth image has pixel values that correspond to the distances.

If the sensor that is used to produce the range image is properly calibrated, the depth image values can be given directly in physical units, such as meters.

There exist different sensor and techniques to generate depth image sequence from sensed environment such as stereo triangulation, sheet of light triangulation, structured light, time-of-flight, interferometry, or coded aperture for example. Some imaging system features both depth sensor as well as color sensor which are different and also spatially distant from each other as seen in **Figure 2** (Azure Kinect DK coordinate systems | Microsoft Docs, https://docs.microsoft.com/en-us/azure/kinect-dk/coordinate-systems).

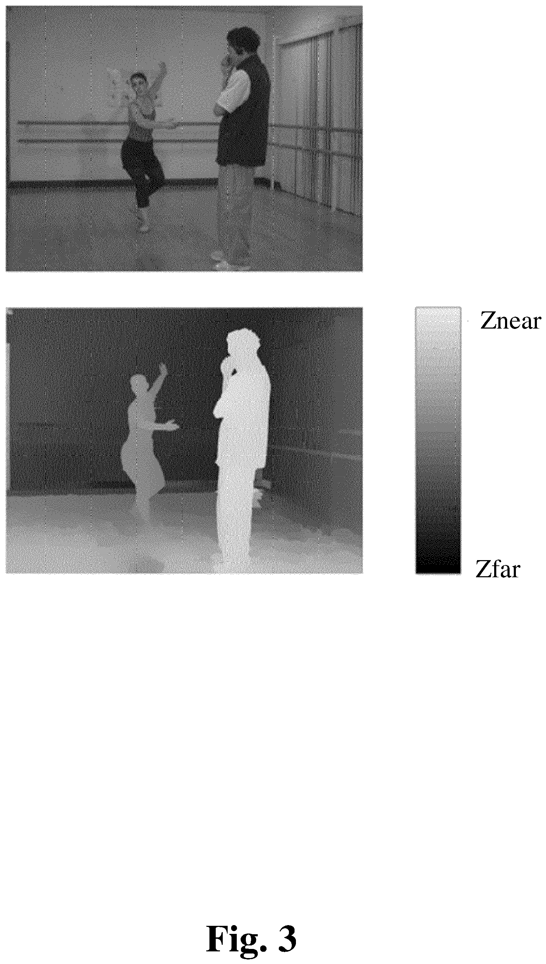

An example of content captured by depth sensor coupled with a color sensor is given in **Figure 3** (Sun, Wenxiu, Lingfeng Xu, Oscar C. Au, Sung Him Chui, and Chun Wing Kwok. "An overview of free view-point depth-image-based rendering (DIBR)." In APSIPA Annual Summit and Conference, pp. 1023-1030. 2010). 3D data representation of captured content may use video-plus-depth format. On top of **Figure 3** is represented the video content and at the bottom is represented the depth image values between a minimum depth value Zₙₑₐᵣ and maximum depth value Z_{far}.

### SUMMARY

The following section presents a simplified summary of the at least one exemplary embodiment in order to provide a basic understanding of some aspects of the present disclosure. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present disclosure, there is provided , a method of encoding depth image sequence in a single-layer bitstream, wherein the method comprises:
- obtaining depth representation information defining information used to obtain a depth map sequence based on depth image sequence;
- obtaining the depth map sequence by coding the depth image sequence based on the depth representation information;
- encoding the depth map sequence and the depth representation information in a single-layer bitstream.

In some embodiments, the method further comprises encoding in the bitstream, a single-layer video data information indicating the bitstream is a single-layer bitstream containing depth map sequence.

According to a second aspect of the present disclosure, there is provided a method of decoding depth image sequence from a single-layer bitstream, wherein the method comprises:
- decoding a depth map sequence from the single-layer bitstream; and
- decoding from the single-layer bitstream, depth representation information defining information used to obtain depth image sequence based on decoded depth map sequence.

In some embodiments, the method further comprises obtaining the depth image sequence from the decoded depth map sequence based on the decoded depth representation information.

In some embodiments, the method further comprises decoding from the single-layer bitstream, a single-layer video data information indicating the bitstream is a single layer bitstream containing depth map sequence.

In some embodiments, the depth representation information comprises a minimum value and a maximum value of the depth image sequence.

In some embodiments, single-layer video data information is a depth flag.

In some embodiments, the depth flag is signalled in a parameter set at the sequence level.

In some embodiments, the depth flag is signalled as a depth map sequence supplemental enhancement information message.

In some embodiments, the single-layer video data information is a particular value of a content type parameter.

In some embodiments, the content type parameter is signalled in a parameter set at the sequence level.

In some embodiments, the content type parameter is signalled as a content type information supplemental enhancement information message.

In some embodiments, the content type information supplemental enhancement information message further comprises a syntax element that specifies a type of mapping between a depth map format and a video picture format.

In some embodiments, the depth representation information is signalled as a primary depth representation information supplemental enhancement information message.

In some embodiments, single-layer video data information is signalled in a scalability dimension information supplemental enhancement information message.

In some embodiments, single-layer video data information is signalled as a content type parameter in a Scalability dimension scalability information supplemental enhancement information message.

According to a third aspect of the present disclosure, there is provided a bitstream formatted according to a method according to the first or second aspects of the present disclosure.

According to a fourth aspect of the present disclosure, there is provided a system comprising means for performing one of the method according to a method according to the first or second aspects of the present disclosure.

According to a fifth aspect of the present disclosure, there is provided a computer program product including instructions which, when the program is executed by one or more processors, causes the one or more processors to carry out a method according to the first or second aspects of the present disclosure.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present disclosure, and in which:
**Figure 1** shows an example of depth values according to the z-axis convention in accordance with prior art;
**Figure 2** shows an example of a depth and color camera in accordance with prior art;
**Figure 3** shows a RGBD format from real captured sequence in accordance with prior art;
**Figure 4** shows extension of 2D video codecs handling depth coding in accordance with prior art;
**Figure 5** shows the definition of different types of layers of MV-HEVC in accordance with prior art;
**Figure 6** shows the table G.3 of HEVC standard in accordance with prior art;
**Figure 7** shows the table F.1 of 3D-HEVC standard in accordance with prior art;
**Figure 8** shows the table 15 of VVC standard in accordance with prior art;
**Figure 9** shows a schematic block diagram of steps of a method 100 of encoding depth image sequence in a single-layer bitstream, in accordance with at least one exemplary embodiment of the present disclosure;
**Figure 10** shows a schematic block diagram of steps of a method 200 of decoding depth image sequence from a single-layer bitstream, in accordance with at least one exemplary embodiment of the present disclosure;
**Figure 11** shows an example of a depth flag signalled in a SPS in accordance with at least one exemplary embodiment of the present disclosure;
**Figure 12** shows an example of a depth map sequence SEI message in accordance with at least one exemplary embodiment of the present disclosure;
**Figure 13** shows an example of a content type parameter signalled in a SPS in accordance with at least one exemplary embodiment of the present disclosure;
**Figure 14** shows an example of a content type information SEI message in accordance with at least one exemplary embodiment of the present disclosure;
**Figures 15** and **16** show an example of a primary depth representation information SEI message in accordance with at least one exemplary embodiment of the present disclosure;
**Figure 17** shows an example of a content type information SEI message in accordance with at least one exemplary embodiment of the present disclosure;
**Figure 18** shows an example of a Scalability dimension information (SDI) SEI message in accordance with at least one exemplary embodiment of the present disclosure;
**Figure 19** shows an example of a Scalability dimension information (SDI) SEI message in accordance with at least one exemplary embodiment of the present disclosure;
**Figure 20** shows a schematic block diagram of steps of a method 300 of encoding video data related to video pictures having particular content types in a bitstream, in accordance with at least one exemplary embodiment of the present disclosure.
**Figure 21** shows a schematic block diagram of steps of a method 400 of decoding video data related to video pictures having particular content types from a bitstream, in accordance with at least one exemplary embodiment of the present disclosure.
**Figure 22** shows a schematic block diagram illustrating an example of a system in which various aspects and exemplary embodiments are implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present disclosure is intended to cover all modifications, equivalents, and alternatives falling within the spirit and scope of the present disclosure.

An image may be a video frame belonging to a video, i.e. a temporal sequence of video frames. A temporal relationship exists between the video frames of a video.

An image may also be a still image.

An image comprises at least one component (also called channel) determined by a specific picture/video format which specifies all information relative to samples values and all information which may be used by a display unit and/or any other device to display and/or to decode image data related to said image in order to generate pixel values.

An image comprises at least one component usually expressed in the shape of an 2D array of samples.

A monochrome image comprises a single component and a color image (also denoted texture image) may comprise three components.

For example, a color image may comprise a luma (or luminance) component and two chroma components when the image/video format is the well-known (Y,Cb,Cr) format or may comprise three color components (one for Red, one for Green and one for Blue) when the image/video format is the well-known (R,G,B) format. The image/video format may also be the well-known (R,G,B,D) forma (D for depth information).

An image may also be an infra-red image.

Each component of an image may comprise a number of samples relative to a number of pixels of a display screen on which the image is intended to be displayed. For instance, the number of samples comprised in a component may be the same as, or a multiple (or fraction) of, a number of pixels of a displaying surface on which the image is intended to be displayed.

The number of samples comprised in a component may also be a multiple (or fraction) of a number of samples comprised in another component of a same image.

For example, in the case of an image/video format comprising a luma component and two chroma components like the (Y,Cb,Cr) format, dependent on the color format considered, the chroma component may contain half the number of samples in width and/or height, relative to the luma component.

Texture information of an image may be defined as being the content represented by the single component of a monochrome image or by the luma and chroma components of a color image which are intended to be displayed to the user.

A sample is the smallest visual information unit of a component composing an image. A sample value may be, for example a luma or chroma value or a colour value of the red, green or blue component of a (R, G, B) format.

A pixel value of a displaying surface may be represented by one sample for monochrome image and by multiple co-located samples for color image. Co-located samples associated with a pixel mean samples corresponding to the location of a pixel in the display screen.

It is common to consider an image as being a set of pixel values, each pixel being represented by at least one sample.

In one aspect, the present disclosure is directed to, among other things, systems for and methods of encoding, decoding, acquiring, generating, manipulating and/or editing depth information of video pictures.

Depth representation information may define information used to obtain depth map values based on depth image values representing distances from a sensing device to points in a scene or inversely, to obtain depth image values representing distances from a sensing device to points based on depth map values.

In some embodiments, depth representation information may comprise minimum Zₙₑₐᵣ and maximum Z_{far} depth values of a depth image or or a depth image sequence.

In some embodiments, depth representation information may also indicate whether a value of a depth map represents a depth image value (Z value) or an inverse of a depth image value.

Depth map sequence may comprise at least one depth map. Depth maps in depth map sequences are consecutive depth maps in time order, typically in a time-increasing order.

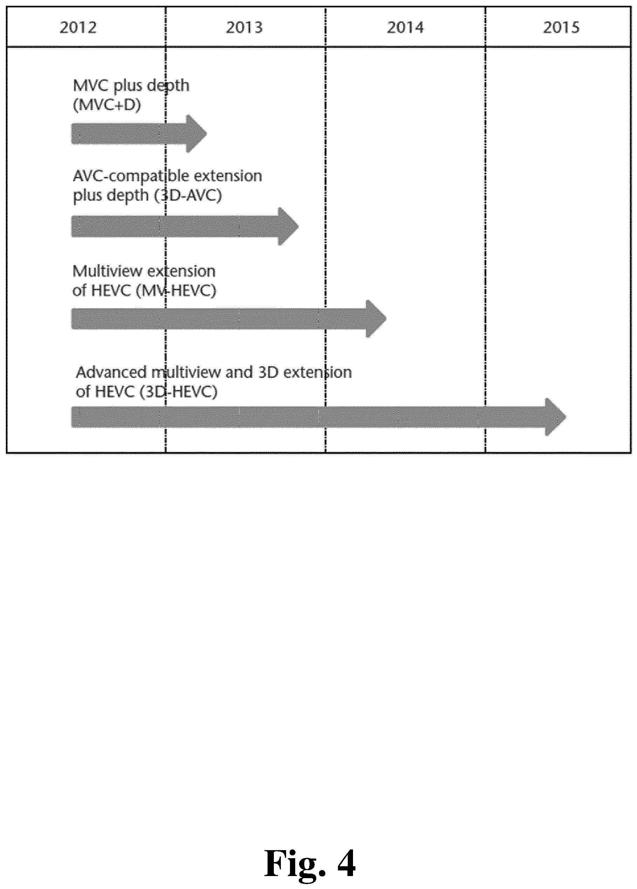

**Figure 4** shows various extensions to the Advanced Video Coding (VVC, ISO/IEC 23090-3 Versatile Video Coding (VVC) / ITU-T Rec. H.266) and High Efficiency Video Coding (HEVC) standard (ISO/IEC 23008-2 High Efficiency Video Coding (HEVC) / ITU-T Rec. H.265, Chen, Ying, and Anthony Vetro. "Next-generation 3D formats with depth map support." IEEE MultiMedia 21, no. 2 (2014): 90-94). These extensions handle depth coding and have been developed or are under development.

For example, one of these extensions is MVC (Multiview Video Coding, ISO/IEC 14496 10, Annex H) that is a multi-view extension of AVC (Advanced Video coding, ISO/IEC 14496-10 Advanced Video Coding (AVC) / ITU-T Rec. H.264) that has been developed for the coding of two or more views. A key feature of this standard is that it maintains AVC compatibility, meaning that one view of the compressed multi-view bitstream can be decoded by a legacy AVC decoder. Relative to independent coding of all views, compression gain is achieved by allowing the other views to be predicted using pictures from different views at the same time instances. In this process, known as inter-view prediction, a block-based disparity shift between the reference view and the current views is determined and is used to perform a disparity-compensated prediction. This is similar to the motion-compensated prediction used in conventional video coding, but it is based on pictures with different viewpoints rather than pictures at different time instances. The MVC approach is simply defined by two features: extending the high-level syntax so that the appropriate signalling of view identifiers and their references is supported and defining a process by which decoded pictures of other views can be used to predict a current picture in another view.

For example, one extension of AVC, called MVC+D (ISO/IEC 14496-10, Annex I), specifies an independent second stream for the representation of depth information as well as high-level syntax signalling of the necessary information to express the interpretation of the depth information and its association with the video data. MVC+D approach adds support for depth information using specially designated network abstraction layer (NAL) units for depth information and defines a dedicated profile for the decoding of multi-view plus depth video. This approach does not involve macroblock-level changes to the AVC or MVC syntax, semantics, and decoding processes. The corresponding 3D video codec is referred to as MVC+D.

For example, one extension of HEVC, called MV-HEVC (Multi-view High Efficiency Video Coding, ISO/IEC 23008-2 Annex G) framework, supports for depth maps with auxiliary picture syntax. The auxiliary picture decoding process is the same for video or Multiview video, but it may not necessarily have normative decoding requirements as part of a profile. This enables applications to optionally decode depth maps. If the industry desires an additional level of interoperability, a profile that requires the capability to decode depth information is added at a later stage.

More precisely, MV-HEVC leverages the ability to encode different layers into the same bitstream. A layer is a set of VCL NAL units that all have a particular value of **nuh_layer_id** and the associated non-VCL NAL units, or one of a set of syntactical structures having a hierarchical relationship. Depending on the context, either a first layer concept or a second layer concept applies. The first layer concept is also referred to as a scalable layer, wherein a layer may be a spatial scalable layer, a quality scalable layer, a view, etc. A temporal true subset of a scalable layer is not referred to as a layer but referred to as a sub-layer or temporal sub-layer. The second layer concept is also referred to as a coding layer, wherein higher layers contain lower layers, and the coding layers are the CVS (Coded Video Sequence), picture, slice, slice segment, and CTU (Coding Tree Unit) layers.

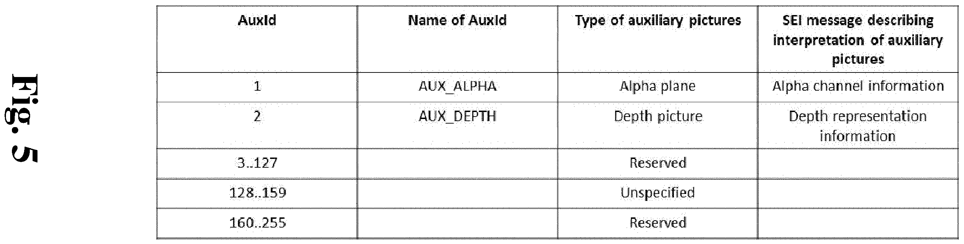

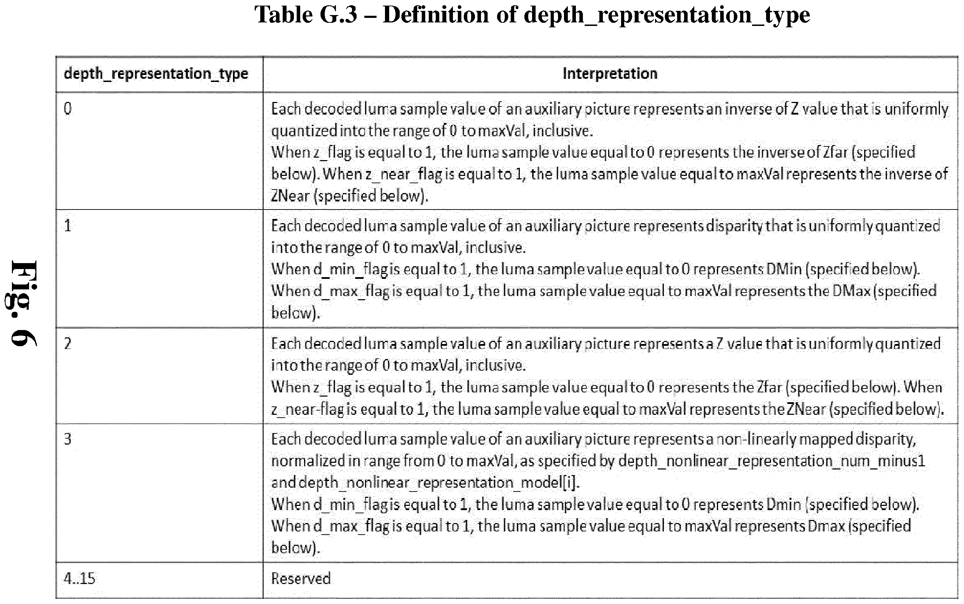

MV-HEVC design defines different types of layer: Texture or depth information, Multiview, spatial/quality scalability, auxiliary. Scalability mask index indicates the different type of layers as shown in **Figure 5** wherein **scalability_mask_flag**[ i ] equal to 1 indicates that **dimension_id** syntax elements corresponding to the i-th scalability dimension in **Figure 5** are present. **scalability_mask_flag[ i ]** equal to 0 indicates that **dimension_id** syntax elements corresponding to the i-th scalability dimension are not present. The dimension that is relevant for depth information in MV-HEVC is the auxiliary dimension of the scalability mask which is index 3, i.e. Auxiliary. By checking the **AuxId** value one can determine if current the layer (Ild) is not an auxiliary pictures (value 0), an auxiliary alpha plane (value 1), or an auxiliary depth picture (value 2) as shown below. Then, if a layer has an auxiliary type of AUX_DEPTH, this layer further contains the Depth Representation Information (DRI) SEI (Supplemental Enhancement Information) message whose semantic is defined in G.14.3.3 Depth representation information SEI message semantics of the specification. In the context of depth maps, this message allows to signal Zₙₑₐᵣ and Z_{far} depth values (sometimes also called Zₙₑₐᵣ and Z_{far} planes) and a depth value (Z value) or an inverse of Z value is coded. Those representation types are defined in table G.3 (**Figure 6**) in the HEVC standard and signalled in a **depth_representation_type** parameter of the depth representation information SEI message.

Note that the values 1 and 3 in Table G.3 are defining a disparity measure, i.e. the relative displacement of an object in two stereoscopic images, which implies at least two views of a scene. This is not relevant for the present disclosure since the present disclosure focuses on a single view, single layer, depth map sequence.

In MV-HEVC, the auxiliary ID can be used to signal that a layer is carrying depth information.

For example, in one extension of AVC, called 3D-AVC, depth views are coded similar to MVC+D, and no block-level changes for depth coding have been introduced. In 3D-AVC, the texture information of a single view is coded in a manner that is compatible with AVC.

For example, in one extension of HEVC, called 3D-HEVC, multi-layer design on HEVC is leveraged in order to encode two types of layers into the same bitstream that are texture layers and depth layers. A depth layer is a layer with a **nuh_layer_id** value equal to i, such that **DepthLayerFlag[ i ]** is equal to 1 and **DependencyId[ i ]** and **AuxId[ i ]** are equal to 0. A texture layer is a layer with a **nuh_layer_id** value equal to i, such that **DepthLayerFlag[ i ], DependencyId[ i ],** and **AuxId[ i ]** are equal to 0. As seen in the definition, the fact that a layer is a texture or a depth layer in 3D-HEVC depends on the value of **DepthLayerFlag** for this layer. This variable is not present as is in the bitstream but can be derived from it according to the following pseudo code sequence of already seen in the context of MV-HEVC:

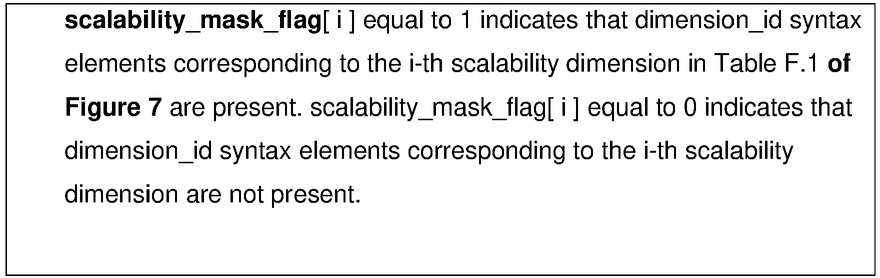

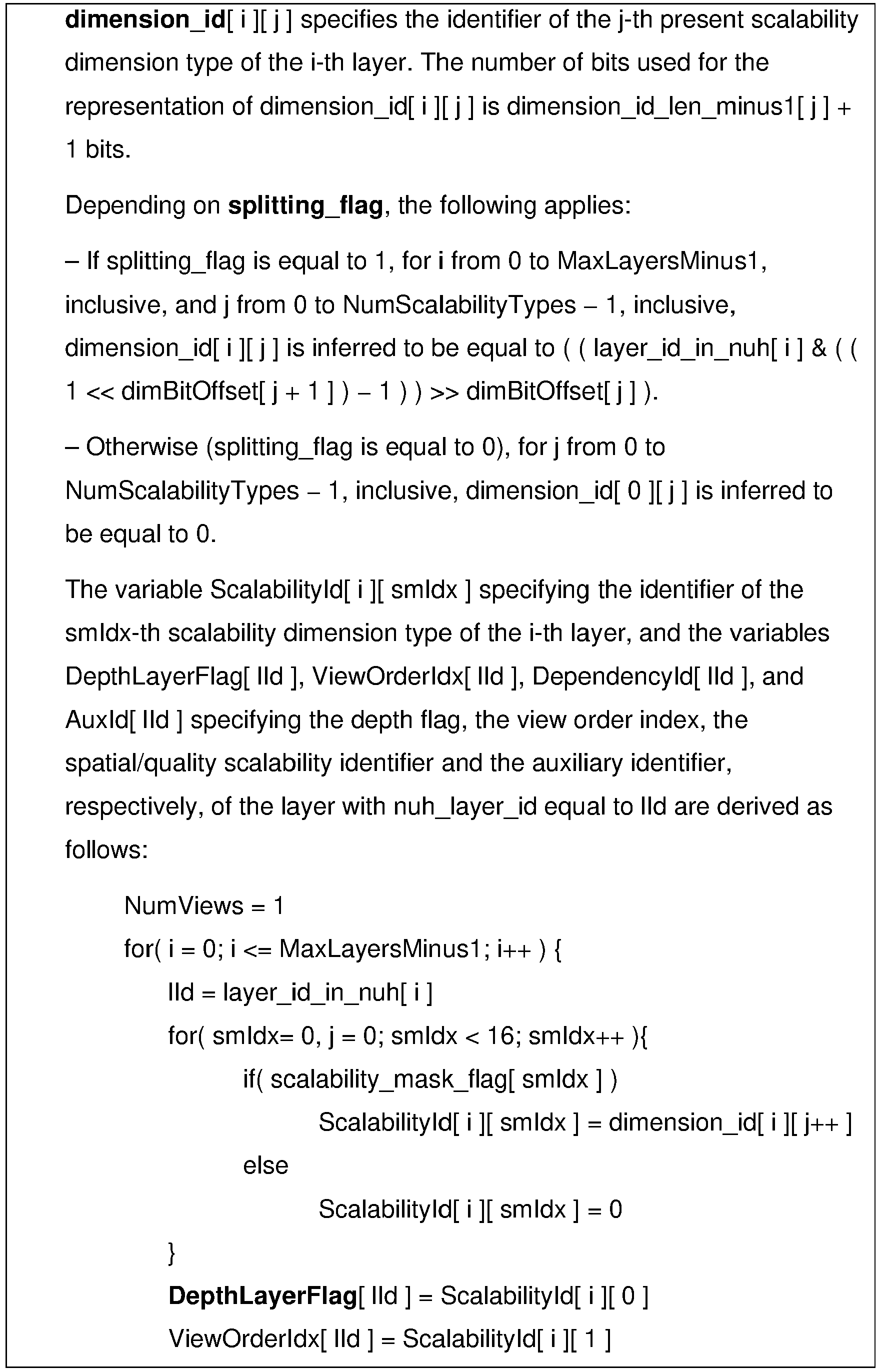

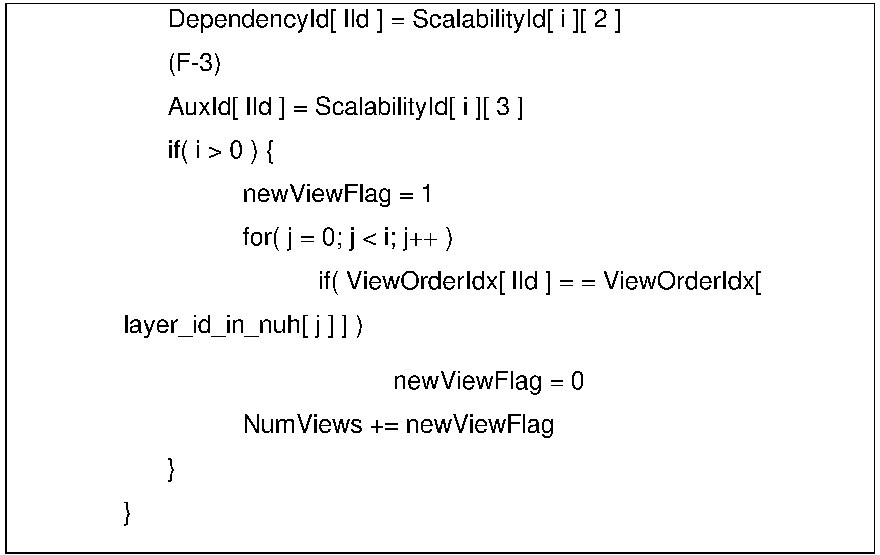

In other words, if the value is 1 for the index 0 of **dimension_id** for the i^{th} layer, then the layer is a depth layer. If the value is 0 for the index 0 of **dimension_id** for the i^{th} layer, then the layer is a texture layer.

As defined in 3D-HEVC, depth and texture layers are not auxiliary layers since AuxId must be 0.

In addition, 3D-HEVC defines specific coding tools for both texture and depth layers which make them not compatible with regular HEVC single layers. For instance. A summary of those specific coding tools can be found in Tech, Gerhard, Ying Chen, Karsten Müller, Jens-Rainer Ohm, Anthony Vetro, and Ye-Kui Wang. "Overview of the multiview and 3D extensions of high efficiency video coding." IEEE Transactions on Circuits and Systems for Video Technology 26, no. 1 (2015): 35-49.

To support these tools, the syntax of the bitstream is also different from a regular HEVC single layer as stated in Tech, Gerhard, Ying Chen, Karsten Müller, Jens-Rainer Ohm, Anthony Vetro, and Ye-Kui Wang. "Overview of the multiview and 3D extensions of high efficiency video coding." IEEE Transactions on Circuits and Systems for Video Technology 26, no. 1 (2015): 35-49.

In 3D-HEVC a new scalability ID element called depth flag has been introduced. In contrast to layers indicating depth information by the auxiliary ID, layers enabling the depth flag can use the new 3D-HEVC coding tools.

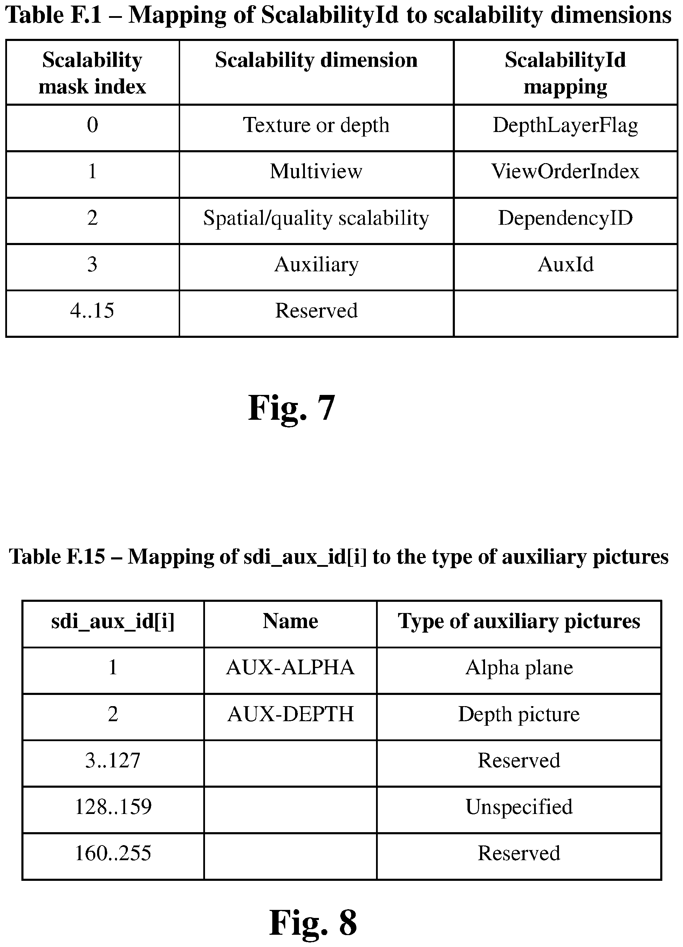

VVC supports depth information as an auxiliary layer (similar to MV-HEVC), with signalling implemented as a specific SEI in VSEI (Versatile Supplemental Enhancement Information messages for coded video bitstreams / ITU-T Rec H.274). The specific SEI is called Scalability Dimension Information (SDI) SEI. The scalability dimension information (SDI) SEI message provides the SDI for each layer in the current CVS, i.e., the CVS containing the SDI SEI message, such as 1) when there may be multiple views, the view ID of each layer; and 2) when there may be auxiliary information (such as depth information or alpha) carried by one or more layers, the auxiliary ID of each layer. When an SDI SEI message is present in any AU of a CVS, an SDI SEI message shall be present for the first AU of the CVS. All SDI SEI messages in a CVS shall have the same content. As such, there has to be a (primary) video layer and depth information can only be an auxiliary layer, as shown in Table 15 of **Figure 8** wherein **sdi_aux_id[i]** equal to 0 indicates that the i-th layer in the current CVS does not contain auxiliary pictures; **sdi_aux_id[i]** greater than 0 indicates the type of auxiliary pictures in the i-th layer in the current CVS as specified in Table 15 of **Figure 8****.** When **sdi_auxiliary_info_flag** is equal to 0, the value of **sdi_aux_id[i]** is inferred to be equal to 0. Note the interpretation of auxiliary pictures with **sdi_aux_id[i]** in the range of 128 to 159 in Table 15 of **Figure 8****,** inclusive, is specified through means other than the **sdi_aux_id[i]** value. **sdi_aux_id[i]** shall be in the range 0 to 2, inclusive, or 128 to 159, inclusive, for bitstreams conforming th this version of this specification. Although the value of **sdi_aux_id[i]** shall be in the range 0 to 2, inclusive, or 128 to 159, inclusive, for bitstreams conforming th this version of this specification, decoders shall also allow other values of **sdi_aux_id[i]** in the range of 0 to 255, inclusive.

If **sdi_aux_id[i]** is equal to 0, the i-th layer is referred to as a primary layer. Otherwise, the i-th layer is referred to as an auxiliary layer. When **sdi_aux_id[i]** is equal to 1, the i-th layer is also refer to as an alpha auxiliary layer. When **sdi_aux_id[i]** is equal to 2, the i-th layer is also referred to as a depth auxiliary layer.

In existing technologies, several shortcommings and defficiencies appear to signal depth information of video pictures.

For example, using MV-HEVC, depth information of video pictures is carried as auxiliary pictures of a main picture (base layer). Therefore, the auxiliary layer with depth information cannot exist without a base layer and thus cannot constitute a single layer bitstream independent of the base layer. Next, information about the depth representation carried by the depth representation information SEI message, must be part of an auxiliary layer of type depth information (AUX_DEPTH). As a result, this SEI message cannot be part of a base layer since a base layer is per definition not an auxiliary layer.

For example, using 3D-HEV, depth information of video pictures is carried as a type of layer called depth layer with specific syntax elements and specific coding tools which make a depth layer incompatible with a regular HEVC base layer.

The deficiencies described here for MV-HEVC are common to the multi-layer support in VVC/H.266 which has been built with similar design principles as HEVC/H.265 and MV-HEVC.

Multiple use cases exist in which depth information of video pictures have to be processed and/or coded and/or transmitted with or without texture information of the video pictures.

For example, Xia et Al. (L. Xia, C. -C. Chen and J. K. Aggarwal, "Human detection using depth information by Kinect," CVPR 2011 WORKSHOPS, Colorado Springs, CO, USA, 2011, pp. 15-22, doi: 10.1109/CVPRW.2011.5981811, https://cvrc.ece.utexas.edu/Publications/HAU3D11_Xia.pdf) present a human detection method using depth information taken by a sensing device. The proposed model-based approach detects humans using a 2-D head contour model and a 3-D head surface model. A segmentation scheme is also proposed to segment the human from his/her surroundings and extract the whole contours of the figure based on detection point. The detection method as described by Xia et al. only need depth information of video pictures.

Choi et al. (B. Choi, Ç. Meriçli, J. Biswas and M. Veloso, "Fast human detection for indoor mobile robots using depth images," 2013 IEEE International Conference on Robotics and Automation, Karlsruhe, Germany, 2013, pp. 1108-1113, doi: 10.1109/ICRA.2013.6630711., https://sci-hub.se/10.1109/icra.2013.6630711) present a "fast human detection algorithm for mobile robots equipped with depth cameras". The method segments a depth image using a graph-based segmentation algorithm and applies a set of parameterized heuristics to filter and merge the segmented regions to obtain a set of candidates. Finally, the method computes a Histogram of Oriented Depth (HOD) descriptor for each candidate, and tests for human presence with a linear SVM." The detection method as described by Choi et al. only need depth information of video pictures.

Yan et al. (Yan, S., Yang, J., Leonardis, A. and Kamarainen, J.K., 2021. Depth-only object tracking. arXiv preprint arXiv:2110.11679, https://arxiv.org/pdf/2110.11679.pdf), ) present a deep-learning method for object tracking. The architecture is obtained from a previous model working with RGB-only trackers, namely, DiMP. Yan et al. introduces a variant using depth-only trackers called Depth-DiMP and its extension RGBD-DiMP that additionally considers RGB data, and evaluates the performance of all variants (DiMP, Depth-DiMP and RGBD-DiMP) which share the same architecture: a pre-trained feature extraction module, an offline trained target estimation module, and an online trained classifier module." The deep-learning method of as described by Yan et al. may need both depth and texture information of video pictures but it may also need only depth information because Yan et al. results show that depth-only trackers are superior to state-of-the-art RGB trackers.

Pulli et al. (Pulli, K. and Pietikäinen, M., 1993, May. Range image segmentation based on decomposition of surface normals. In Proceedings of the Scandinavian conference on image analysis (Vol. 2, pp. 893-893). Proceedings published by various publishers, https://people.csail.mit.edu/kapu/papers/SCIApap.pdf) present a segmentation method based on depth maps. Specifically, the segmentation method is based on local approximations of normal vectors, that segments a range image into homogeneous surface regions. The segmentation method of as described by Pulli et al. may need only depth information of video pictures.

Shotton et al. (J. Shotton et al., "Real-time human pose recognition in parts from single depth images," CVPR 2011, Colorado Springs, CO, USA, 2011, pp. 1297-1304, doi: 10.1109/CVPR.2011.5995316, https://www.microsoft.com/en-us/research/wp content/uploads/2016/02/BodyPartRecognition.pdf) present a method to quickly and accurately predict 3D positions of body joints from a single depth image, using no temporal information. The method of as described by Shotton et al. may need only depth information of video pictures.

Li et al. (Li, Z. and Stamos, I., 2023. Depth-based 6DoF Object Pose Estimation using Swin Transformer. arXiv preprint arXiv:2303.02133, https://arxiv.org/pdf/2303.02133.pdf) present a deep learning-based method to infer the 6DoF pose of objects from depth images. The method calculates the angles between surface normal vector and three coordinate axes. Then the method normalizes them to the RGB color range to form an RGB-like image, where each pixel has three normalized angle values. Such images are fed into an image representation learning network. In addition to the normal vector angles images, the method lifts depth images to point clouds using the given camera parameters and extract point clouds features via the point clouds representation learning network. Combining these two embeddings, our SwinDePose architecture can leverage depth images and point clouds information for more accurate 6D pose estimation. The method of as described by Li et al. may need both depth and texture information of video pictures.

Newcombe et al. (R. A. Newcombe et al., "KinectFusion: Real-time dense surface mapping and tracking," 2011 10th IEEE International Symposium on Mixed and Augmented Reality, Basel, Switzerland, 2011, pp. 127-136, doi: 10.1109/ISMAR.2011.6092378, https://www.microsoft.com/enus/research/wp-content/uploads/2016/02/ismar2011.pdf) present a method for real-time reconstruction and mapping of indoor objects in variable lighting conditions, using only a moving low-cost depth camera and commodity graphics hardware. All of the depth information streamed from a Kinect sensor is fused into a single global implicit surface model of the observed scene in real-time. The current sensor pose is simultaneously obtained by tracking the live depth frame relative to the global model using a coarse-to-fine iterative closest point (ICP) algorithm, which uses all of the observed depth information available." The method of as described by Newcombe et al. may need only depth information of video pictures.

Other use cases exist in which depth information of video pictures have to be processed and/or coded and/or transmitted with or without texture information of the video pictures such in the domains of object recognition (https://link.springer.com/content/pdf/10.1007/978-3-642-37444-9_41.pdf https://sci-hub.se/10.1109/icarsc.2016.35 or https://link.springer.com/content/pdf/10.1007/978-3-642-37444-9_41.pdf https://sci-hub.se/10.1109/icarsc.2016.35), Robot/unmanned vehicle navigation (https://ieeexplore.ieee.org/document/6224766 or https://ieeexplore.ieee.org/document/6224766), scene completion from single depth image (https://www.ijcai.org/proceedings/2018/0101.pdf or https://www.ijcai.org/proceedings/2018/0101.pdf.

In existing technologies, encoding/decoding and transmitting depth map sequence of video pictures requires the encoding/decoding and transmitting of texture information of the video pictures because depth map sequence is considered as being auxiliary information of video pictures. Encoding/decoding and transmitting depth map sequence of video pictures cannot thus be implemented into any video codec with a single layer, e.g. AVC, EVC or even AV1 (AOMedia Video 1) which is from the AOM (Alliance for Open Media) group, since it would imply the loss of depth-related information and would make a receiver uncapable of interpreting and thus retrieving the depth images from the video bitstream.

Moreover, some use cases as discussed below require only depth image/map sequence encoding/decoding/transmitting and existing technologies do not provide means for coding/transmitting only depth image/map sequence of video pictures without coding/transmitting texture information of the video pictures.

At least one exemplary embodiment of the present disclosure has been devised with the foregoing in mind.

Embodiments of the present disclosure enables the encoding of depth image/map sequence and associated depth representation information as a single-layer bitstream, denoted depth bitstream. The depth bitstream does not contain texture information of the video pictures and may be encoded/decoded/transmitted independently of a bitstream, denoted texture bitstream, carrying texture information of the video pictures. The depth bitstream may be decodable by regular existing 2D video decoder (no specific coding tool needed).

Embodiments of the present disclosure allow to encode a depth image sequence in the single-layer bitstream with the sufficient metadata (depth representation information) embedded such that the receiver can decode the single-layer bitstream with a regular 2D decoder and process the depth representation information in order to correctly interpret the decoded samples in the decoded depth map sequence. Depth map sequence encoding and transport can be optimised irrespective of the presence of an associated texture information sequence to be encoded. Embodiments of the present disclosure requires less processing since only the depth bitstream can be encoded and transmitted in comparison with MV-HEVC, 3D-HEVC and multi-layer VVC.

For use cases where a sender needs to send only a depth information of a video (and not the texture information of the video), this allows the transmission of depth image/map sequence on the network and/or its storage in a binary file, e.g. a ISOBMFF as defined in the standard ISO/IEC 14496-12, as any other 2D regular video bitstreams. But other file instantiation may be used without any limit of the scope of the present disclosure.

For use cases where a sender needs to send both texture and depth information of video pictures, embodiments of the present disclosure allow to encode the texture information and transmit in parallel both the texture information (texture bitstream) and the depth information (depth bitstream) in a multi-stream approach. This multi-stream approach allows to:
- choose two different codecs for the texture and the depth information (e.g. AVC and HEVC), or same codec but different profiles/levels;
- set different encoding quality between the texture and depth information;
- set different encoding hierarchy of group of pictures in each bitstream, i.e. different position of reference frames (I frame and P frames);
- set different quality of service for the network stream of texture and depth bitstreams, e.g. the texture bitstream can be deemed of higher priority than the depth bitstream, or vice versa;
- set different retransmission strategy for each texture and depth bitstream, e.g. if the texture or depth bitstream is deemed more important than the other one, then this higher importance bitstream can be sent with retransmission of lost network packets while the other doesn't. Lost packet would result in decoding artefact, but this can be considered acceptable for the low importance bitstream depending on the application;
- use different transport protocols for each texture and depth stream, i.e. fundamentally different protocol can be used, e.g. one bitstream will be sent over a TCP-based network protocol and the other bitstream will be sent over a UDP-based network protocol;
- easily multiplex the texture and depth bitstreams using a network protocol enabling multiplexing, e.g. each bitstream may be mapped to different QUIC Streams(RFC 9000: QUIC: A UDP-Based Multiplexed and Secure Transport (rfc-editor.org) , https://www.rfc-editor.org/rfc/rfc9000.html).

Embodiments of the present disclosure relates to a method of encoding depth image sequence in a single-layer bitstream. The method obtains depth representation information defining information used to obtain depth map sequence based on depth image sequence; obtains a depth map sequence by coding the depth image sequence based on the depth representation information; encode the depth map and the depth representation information in the single-layer bitstream.

Embodiments of the present disclosure further relate to a method of decoding depth image sequence from a single-layer bitstream. The method decoded from the single-layer bitstream, a depth map sequence and a depth representation information defining information used to obtain depth image sequence based on depth map sequence.

Embodiments of the present disclosure further relate to a method of encoding video data having particular content types in a bitstream, the method comprises encoding in the bitstream a single-layer video data information indicating a content type of the video data and encoding in the bitstream video data based on the content type indicated by the encoded single-layer video data information.

Embodiments of the present disclosure further relate to a method of decoding video data having particular content types from a bitstream, the method comprises decoding from the bitstream a single-layer video data information indicating a content type of the video data and decoding from the bitstream the video data based on the content type indicated by the decoded single-layer video data information.

Embodiments of the present disclosure are often described in the context of encoding/decoding system or device, which acquires or obtains depth information of video pictures and/or processes or methods of acquiring, generating, manipulating and/or editing such depth information, it should be clear that the present disclosure is applicable to other systems, devices, processes and/or methods of acquiring, generating, manipulating and/or editing depth information. The depth information acquisition system may be systems/devices aimed at cinema professionals, including complete focus control after the video is captured, and/or systems/devices directed to non-professionals including, for example, such devices as digital single-lens reflex camera for high-end consumers or consumer video acquisition systems that perform automatic or semi-automatic focus adjustment controls and circuitry during the acquisition of the image/video.

For example, embodiments of the present disclosure may be implemented in conjunction with video acquisition devices (for example, cameras) and/or systems to generate, manipulate and/or edit depth information.

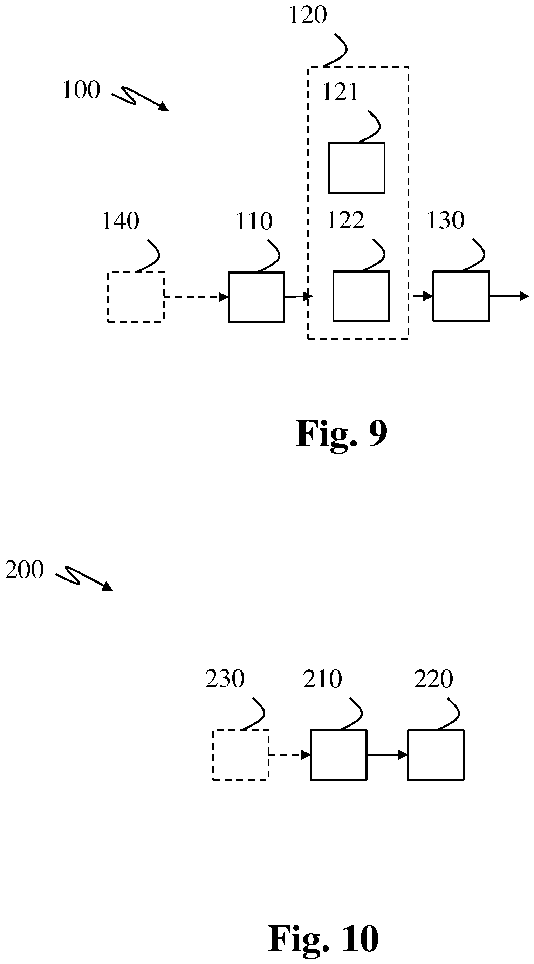

**Figure 9** shows a schematic block diagram of steps of a method 100 of encoding depth image sequence in a single-layer bitstream, in accordance with at least one exemplary embodiment of the present disclosure. The depth image sequence comprises at least one depth image and each depth image value may represent a distance from a sensing device to a point in a scene.

In step 110, depth representation information is obtained. The depth representation information defines information used to obtain depth map sequence based on depth image sequence.

In step 120, a depth map sequence is obtained by coding the depth image sequence based on the depth representation information.

The depth representation information may indicate the use of the inverse of the distance such that as the distance of objects from the camera increases, their coded value (depth map value) decreases and tends quickly to 0. This way, a higher accuracy is kept for close objects than for far objects which is in line with the capability of the human visual system to sense depth better for close objects than at far distance (the reason being that the parallax effect, important cue for perceiving depth, decreases as the distance increases). In additional, when using linear quantization of the inverse of depth image value, then the objects close to the camera are described with a higher granularity while objects far from the camera are described with few quantization levels and depth granularity is less important at far distance since it is less well perceived by the human eye for the reasons described above.

In step 130, the depth map sequence and the depth representation information are encoded in the single-layer bitstream.

In some embodiments, the method 100 further comprises encoding (step 140) in the single-layer bitstream, a single-layer video data information indicating the single-layer bitstream is a single layer bitstream containing depth map sequence.

**Figure 10** shows a schematic block diagram of steps of a method 200 of decoding depth image sequence from a single-layer bitstream, in accordance with at least one exemplary embodiment of the present disclosure. The single-layer bitstream may be obtained from the method 100 of **Figure 9****.**

The depth image sequence comprises at least one depth image and each depth image value may represent a distance from a sensing device to a point in a scene.

In step 210, a depth map sequence from the single-layer bitstream.

In step 220, depth representation information defining information used to obtain depth image sequence based on decoded depth map sequence is decoded from the single-layer bitstream.

In some embodiments, method 200 further comprises obtaining (step 230) the depth image sequence from the decoded depth map sequence based on the decoded depth representation information. In some embodiments, the method 200 further comprises decoding (step 250) from the single-layer bitstream, a single-layer video data information indicating the bitstream is a single-layer bitstream containing depth map sequence.

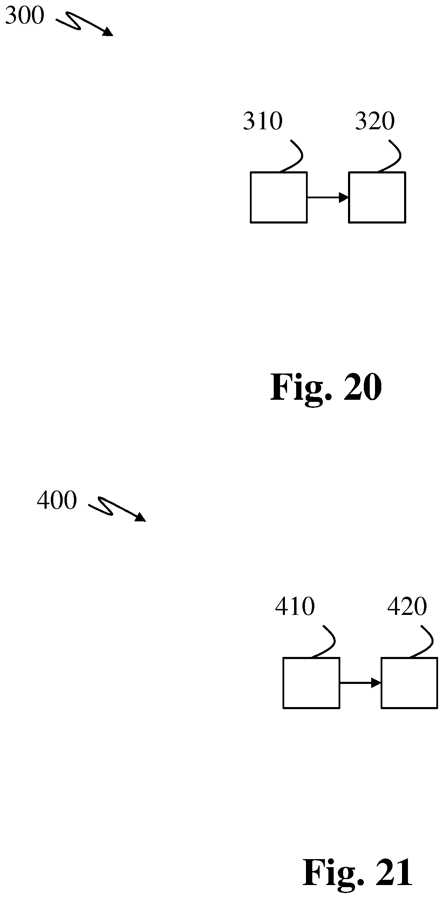

**Figure 20** shows a schematic block diagram of steps of a method 300 of encoding video data related to video pictures having particular content types in a bitstream, in accordance with at least one exemplary embodiment of the present disclosure.

In step 310, a single-layer video data information indicating a content type of the video data is encoded in the bitstream.

In step 320, the video data is encoded in the bitstream based on the content type indicated by the encoded single-layer video data information.

**Figure 21** shows a schematic block diagram of steps of a method 400 of decoding video data related to video pictures having particular content types from a bitstream, in accordance with at least one exemplary embodiment of the present disclosure.

In step 410, a single layer video data information indicating a content type of the video data is decoded from the bitstream.

In step 420, the video data is decoded from the bitstream based on the content type indicated by the decoded single-layer video data information.

In the following, embodiments of the present disclosure are detailed as extension of HEVC or VVC standards. But the present disclosure is not limited to those extensions and may be also implemented as extensions of other standards.

In some embodiment, single-layer video data information is a depth flag i.e. a Boolean value.

This depth flag may indicate whether a base layer in a HEVC compliant bitstream is a depth bitstream or not.

In some embodiments, since each layer has at most one sequence parameter set (SPS) active at any point in time, the depth flag may be signalled in a SPS at the sequence level. However, this option has the drawback of being not backward compatible with the existing HEVC compliant bitstreams, encoders and decoders since it would require changing the syntax of the SPS data structure.

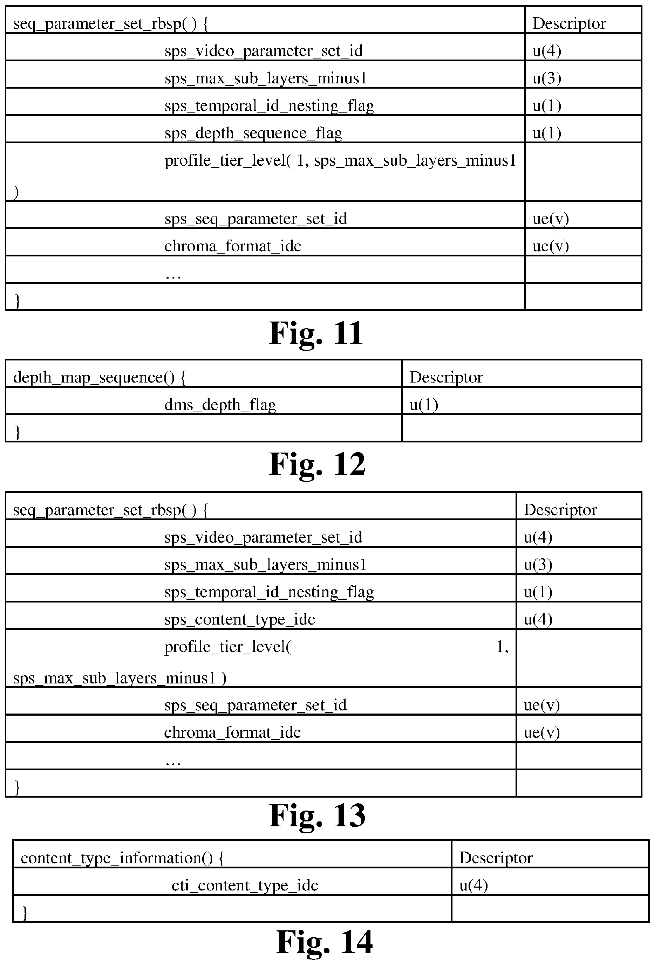

**Figure 11** shows an example of a depth flag signalled in a SPS in accordance with embodiments of the present disclosure.

The depth flag **sps_depth_sequence_flag** equals to 0 indicates that each CVS referring to the SPS does not represent a depth map sequence related to video pictures. When **sps_depth_sequence_flag** equal to 1 indicates that each CVS referring to the SPS represents a depth map sequence related to video pictures.

In some embodiments, the depth flag may be signalled as a depth map sequence SEI (Supplemental Enhancement Information) message.

Compared to the previous embodiment, this embodiment has the advantage of being backward compatible with the existing HEVC compliant bitstreams, encoders and decoders since SEI message can be ignored by legacy decoders and used by the new one. SEI messages are also meant extendable by definition new payload type to register new data structures.

The depth map sequence SEI message specifies that the current layer is representative of a depth map sequence.

When present, the depth map sequence SEI message shall be associated with a i-th layer such that **DepthLayerFlag[ I ], DependencyId[ i ],** and **AuxId[ i ]** are equal to 0. The following semantics apply separately to each **nuh_layer_id targetLayerld** among the **nuh_layer_id** values to which the depth map sequence SEI message applies. The condition **DepthLayerFlag[ i ], DependencyId[ i ],** and **AuxId[ i ]** means that the layer is a regular base layer (**Dependencyld** = 0), not a depth layer (**DepthLayerFlag[ i ]** = 0) in the sense of 3D-HEVC and not an auxiliary layer (**AuxId[ i ]** = 0) in the sense of MV-HEVC.

When present, the depth map sequence SEI message may be included in any access unit. Preferably, when present, the depth map sequence SEI message is included for the purpose of random access in an access unit in which the coded picture with **nuh_layer_id** equal to **targetLayerld** is an IRAP picture.

Preferably, the depth map sequence SEI message may be inserted at a point in the bitstream where decoder may start decoding. This is the usual case for several existing SEI messages.

The depth map sequence SEI message applies to all the video pictures with **nuh_layer_id** equals to **targetLayerld** from the access unit containing the depth map sequence SEI message up to but excluding the next video picture, in decoding order, associated with a depth map sequence SEI message applicable to **targetLayerId** or to the end of the CLVS of the **nuh_layer_id** equal to **targetLayerId,** whichever is earlier in decoding order.

The depth map sequence SEI message may then apply until a new depth map sequence SEI message of the same type appears in the bitstream of up to the end of the layer. Probably, the nature of the layer (depth or not depth) would not change with the duration of the layer. But additional information could be inserted in such a depth map sequence SEI message that would change within the duration of the layer.

**Figure 12** shows an example of a depth map sequence SEI message in accordance with at least one exemplary embodiment of the present disclosure. The depth flag **dms_depth_flag** equal to 0 indicates that each CVS referring to the SPS does not represent a depth map sequence. When **sps_depth_sequence_flag** equal to 1 indicates that each CVS referring to the SPS represents a depth map sequence.

In some embodiments, the single layer video data information may be a particular value of a content type parameter.

In some embodiments, since each layer has at most one sequence parameter set (SPS) active at any point in time, the content type parameter may be signalled in a SPS at the sequence level, i.e. in the SPS is thus a good place to signal the generic content type parameter. However, this embodiment has the drawback of being not backward compatible with the existing HEVC compliant bitstreams, encoders and decoders.

**Figure 13** shows an example of a content type parameter signalled in a SPS in accordance with embodiments of the present disclosure.

The syntax element **sps_content_type_idc** specifies the content type represented by each CVS referring to this SPS. The value of **sps_content_type_idc** shall be in the range of 0 to 15, inclusive. The value 0 indicates the layer is a depth layer, i.e. the single layer bitstream comprises de depth map sequence.

Table 1 provides example of content types signaled by the syntax element **sps_content_type_idc.**

**Table 1**

| **sps_content_type_idc value** | **Content type description** |
|---|---|
| 0 | The CVS represents a depth map sequence. |
| 1 | The CVS represents a disparity sequence. |
| 2 | The CVS represents alpha channel sequence. |
| 3 | The CVS represents an infra-red sequence. |
| 4 | The CVS represents an object mask sequence. |
| 5 | The CVS represents a semantic mask sequence. |
| 6 | The CVS represents a transparency map sequence. |
| 7 | The CVS represents a confidence map sequence. |
| 8-10 | reserved |
| 11-15 | Unspecified and left for usage by external specifications. |

In some embodiment, the content type parameter is a bit-word.

In the example of Table 1, the content type parameter is a word of 4 bits but the content type parameter can use more bits, e.g. 8 bits, in order to allow a higher number of possible content types.

The list of content types of table 1 is not exhaustive and can be further extended with other content types.

A brief information on each content type listed in table 1 is:
- depth map sequence: depth map and depth representation information related to video pictures;
- disparity sequence: sequence of disparity image which describes the relative distance between the same object visible in two left and right views of a stereoscopic view;
- alpha channel sequence: sequence representing alpha channel to use for alpha blending, equivalent to the type AUX_ALPHA in MV-HEVC;
- infra-red sequence: sequence containing images recorded by an infrared camera sensor. These images are typically mono-channel;
- object mask sequence: sequence containing a mask describing the object detected in the images of a video;
- semantic mask sequence: sequence representing the result of a semantic analysis of a scene wherein each image is a semantic mask;
- transparency mask sequence: sequence wherein each image is a transparency mask to be used with an associated video for display on transparent display;
- confidence image sequence: A sequence containing image representing a level of confidence related to an associated process.

In some embodiments, the content type parameter is signalled as a content type information SEI message.

Compared to the previous embodiment, this embodiment has the advantage of being backward compatible with the existing HEVC compliant bitstreams, encoders and decoders since SEI message can be ignored by legacy decoders and used by the new one. SEI messages are also meant extendable by definition new payload type to register new data structures.

The content type information SEI message specifies the type of content represented in the current layer. In particular, the content type information SEI message specifies the current layer is representative of a depth map sequence.

When present, the content type information SEI message may be included in any access unit. Preferably, when present, the SEI message is included for the purpose of random access in an access unit in which the coded picture with **nuh_layer_id** equal to **targetLayerld** is an IRAP picture.

Preferably, the content type information SEI message may be inserted at a point in the bitstream where decoder may start decoding. This is the usual case for several existing SEI messages.

The content type information SEI message applies to all the video pictures with **nuh_layer_id** equal to **targetLayerld** from the access unit containing the content type information SEI message up to but excluding the next video picture, in decoding order, associated with a content type information SEI message applicable to **targetLayerId** or to the end of the CLVS of the **nuh_layer_id** equal to **targetLayerId,** whichever is earlier in decoding order.

The content type information SEI message may then apply until a new message of the same type appears in the bitstream of up to the end of the layer. Probably, the nature of the layer (depth or not depth) would not change with the duration of the layer. But additional information could be inserted in such a content type information SEI message that would change within the duration of the layer.

**Figure 14** shows an example of a content type information SEI message in accordance with at least one exemplary embodiment of the present disclosure.

The syntax element **cti_content_type_idc** specifies the content type represented by the current layer in the CVS referring to this SPS. The value of **cti_content_type_idc** shall be in the range of 0 to 15, inclusive.

Table 2 provides example of content types signaled by the syntax element **cti_content_type_idc.**

**Table 2**

| **cti_content_type_idc value** | **Content type description** |
|---|---|
| 0 | The current layer represents a depth map sequence. |
| 1 | The current layer represents a disparity sequence. |
| 2 | The current layer represents an alpha channel sequence. |
| 3 | The current layer represents an infra-red sequence. |
| 4 | The current layer represents an object mask sequence. |
| 5 | The current layer represents a semantic mask sequence. |
| 6 | The current layer represents a transparency map sequence. |
| 7 | The current layer represents a confidence map sequence. |
| 8-10 | Reserved |
| 11-15 | Unspecified and left for usage by external specifications. |

In some embodiments, the depth representation information may be signalled (outputted/obtained in/from the depth bitstream (method 100) or bitstream (method 200)) as a primary depth representation information SEI message.

The primary depth representation information SEI message is inspired by the depth representation information SEI message but redefined for the context of depth map sequence in a single layer bitstream. Compared to the existing depth representation information SEI message, the case of disparity is mot reused because it only makes sense in the context of multiple views of a same scene.

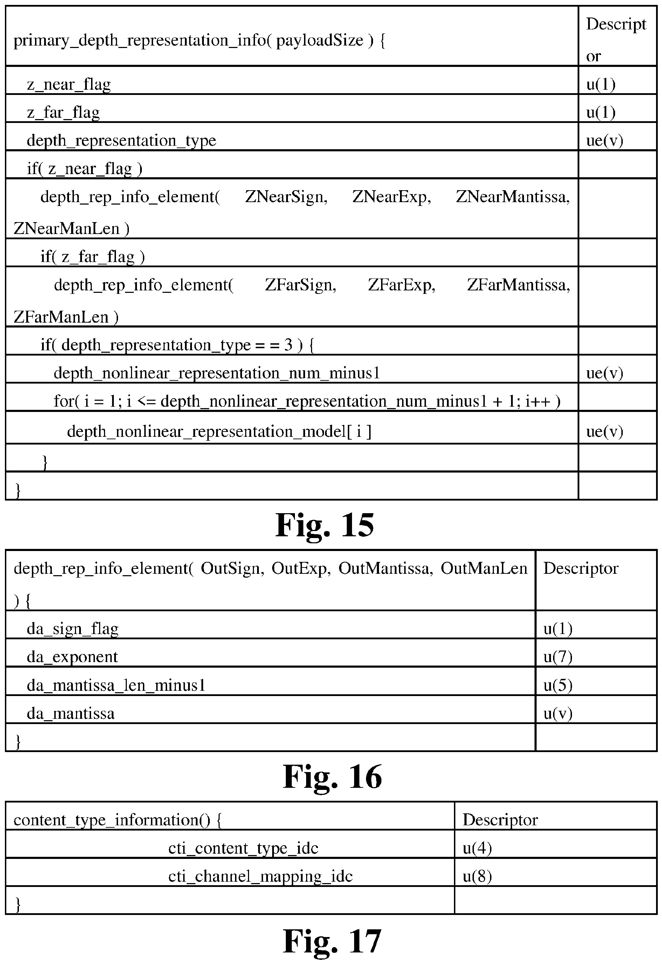

**Figures 15** and **16** show an example of a primary depth representation information SEI message in accordance with at least one exemplary embodiment of the present disclosure.

The syntax elements in the primary depth representation information SEI message specify various parameters for primary layer representing a depth map sequence.

When present, the primary depth representation information SEI message shall be associated with one or more layers with **AuxId** value equal to 0 and **sps_content_type_idc** equal to 0.

Here, definition of **sps_content_type_idc** is the same as in **Figure 13****.** Alternatively, the condition could also be expressed with the depth flag variation.

When present, the primary depth representation information SEI message may be included in any access unit. Preferably, when present, the primary depth representation information SEI message is included for the purpose of random access in an access unit in which the coded picture with **nuh_layer_id** equal to **targetLayerld** is an IRAP picture.

The primary depth representation information SEI message applies to all the pictures with **nuh_layer_id** equal to **targetLayerId** from the access unit containing the primary depth representation information SEI message up to but excluding the next video picture, in decoding order, associated with a primary depth representation information SEI message applicable to **targetLayerId** or to the end of the CLVS of the **nuh_layer_id** equal to **targetLayerId,** whichever is earlier in decoding order.

For brevity, the syntax elements reused as is from the depth representation information message from HEVC are not repeated here.

Table 3 provides example of depth representation information signaled by the syntax element **sps_content_type_idc.**

**Table3**

| **depth_representation_type** | **Interpretation** |
|---|---|
| 0 | Each decoded luma sample value of a picture represents an inverse of Z value that is uniformly quantized into the range of 0 to maxVal, inclusive. |
| | When z_far_flag is equal to 1, the luma sample value equal to 0 represents the inverse of ZFar (specified below). When z_near_flag is equal to 1, the luma sample value equal to maxVal represents the inverse of ZNear (specified below). |
| 2 | Each decoded luma sample value of a picture represents a Z value uniformly quantized into the range of 0 to maxVal, inclusive. |
| | When z_far_flag is equal to 1, the luma sample value equal to 0 corresponds to ZFar (specified below). |
| | When z_near_flag is equal to 1, the luma sample value equal to maxVal represents ZNear (specified below). |
| 3 | Each decoded luma sample value of a picture represents a non-linearly mapped disparity, normalized in range from 0 to maxVal, as specified by depth_nonlinear_representation_num_minus1 and depth_nonlinear_representation_model[ i ]. |
| | When d_min_flag is equal to 1, the luma sample value equal to 0 represents DMin (specified below). |
| | When d_max_flag is equal to 1, the luma sample value equal to maxVal represents DMax (specified below). |
| 4 | Each decoded luma sample value of a picture represents an Euclidean distance from the camera to the object in the scene. |
| 5..15 | Reserved |

On table 3, the primary depth representation information message is defined to be used with regular pictures not auxiliary pictures. In addition, a new type of depth representation, which is the Euclidean distance from the camera center to the object in the distance, is defined. The Z values in the other cases represent the projected distance on the Z axis as defined in the introducing part of the present application.

Table 3 should further be adapted in case the depth maps are coded using a multi-channel image format, e.g. a YCbCr 4:2:0. In this case, it is not the luma sample value but the "each decoded depth value" as decoded depth value being calculated on the basis of the decoded luma sample value and two chroma sample values.

Since a depth map is by definition a mono-channel 2D array, the internal format of the coded video picture in the texture bitstream may not be mono-channel too, i.e. only luma samples. When the coded picture format is multi-channel, there is a need to specify how the mapping is done between the reconstructed depth map (mono-channel) and the decoded video picture or the original depth map (mono-channel) and the video picture to be coded.

In some embodiments, illustrated in **Figure 16****,** the content type information SEI message of **Figure 14** may further comprise a syntax element **cti_channel_mapping_idc** that specifies the type of mapping between a depth map image format and a video picture format used in a current layer.

Table 4 provides examples of values of the syntax element **cti_channel_mapping_idc** that shall be in the range of 0 to 255, inclusive.

**Table 4**

| **Value** | **Description** |
|---|---|
| 0 | This value defines a one-to-one mapping between the luma component and the depth map image. |
| 1 | This value defines a one-to-one mapping between the luma component and the depth map image. In addition, the chroma components are discarded and their sample values are set to 1 << ( BitDepthC - 1 ). |
| 2 | This value defines a mapping in which the three components (luma and two chroma) constitute different bit ranges of the depth map sample values. The coded picture format is 4:4:4 which provides a bit precision of BitDepth + 2*BitDepthC bits, i.e. the bit depth of the luma component plus two times the bit depth of the chroma component. The mapping is defined as follows: |
| | Y: y(i,j) = (m(i,j) & 0xFF0000) >> 16 |
| | Cb: cb(i,j) = (m(i,j) & 0x00FF00) >> 8 |
| | Cr: cr(i,j) = m(i,j) & 0x0000FF |
| | With y(l,j), cb(l,j) and cr(l,j), respectively the samples of the Y, Cb and Cr components and m(l,j) the sample of the depth map. |
| 3..255 | Reserved |

In table 4, two hundred fifty six values are provisioned as many different variations could be defined.

VVC supports depth map sequence as an auxiliary layer, with signalling implemented as SEI message in VSEI. There are two specific ways to extend VSEI to support single layer CVS for VVC: first, by extending the Scalability Dimension Information (SDI) to include a depth flag or, second, by extending the Scalability Dimension Information (SDI) to include content type.

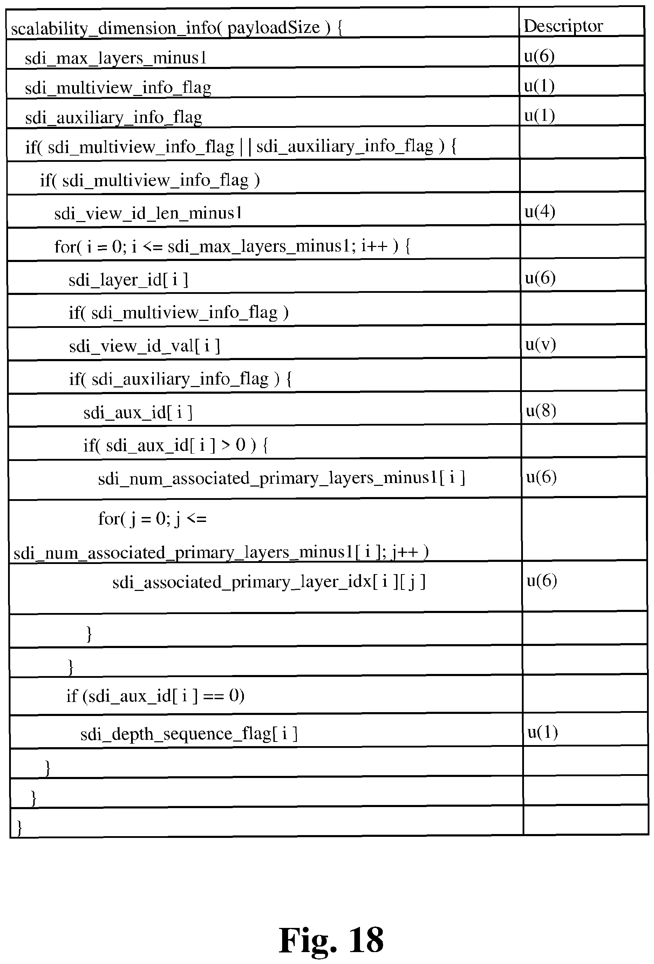

In some embodiments, illustrates in **Figure 18****,** the single layer video data information may be signalled as a Scalability Dimension Information (SDI) SEI message as defined in VVC that may be extended to include a depth flag.

The syntax element **sdi_depth_sequence_flag**[ i ] equal to 1 indicates that the i-th layer represent a depth map sequence as a primary layer. Therefore, **sdi_depth_sequence_flag[ i ]** can only be present in the case that **sdi_aux_id[ i ]** is equal to 0. When **sdi_depth_sequence_flag[ i ]** is equal to 0, it means that the i-th layer does not represent a depth map sequence. When not present, the value of **sdi_depth_sequence_flag[ i ]** is inferred to be equal to 0.

The syntax element **sdi_aux_id** [ i ] equal to 0 indicates that the i-th layer in the current CVS does not contain auxiliary pictures. **sdi_aux_id[ i ]** greater than 0 indicates the type of auxiliary pictures in the i-th layer in the current CVS as specified in Table 15. When **sdi_auxiliary_info_flag** is equal to 0, the value of sdi_aux_id[ i ] is inferred to be equal to 0.

Table 5 provides mapping of **sdi_aux_id[ i ]** to the type of auxiliary pictures.

**Table 5**

| **sdi_aux_id[ i ]** | **Name** | **Type of auxiliary pictures** |
|---|---|---|
| 1 | AUX_ALPHA | Alpha plane |
| 2 | AUX_DEPTH | Depth picture |
| 3..127 | Reserved | |
| 128..159 | Unspecified | |
| 160..255 | Reserved | |

The interpretation of auxiliary pictures associated with **sdi_aux_id[ i ]** in the range of 128 to 159, inclusive, is specified through means other than the **sdi_aux_id[ i ]** value.

**sdi_aux_id[ i ]** shall be in the range of 0 to 2, inclusive, or 128 to 159, inclusive, for bitstreams conforming to this version of this Specification. Although the value of **sdi_aux_id[ i ]** shall be in the range of 0 to 2, inclusive, or 128 to 159, inclusive, in this version of this specification, decoders shall also allow other values of **sdi_aux_id[ i ]** in the range of 0 to 255, inclusive.

If **sdi_aux_id[ i ]** is equal to 0, the i-th layer is referred to as a primary layer. Otherwise, the i-th layer is referred to as an auxiliary layer. When **sdi_aux_id[ i ]** is equal to 1, the i-th layer is also referred to as an alpha auxiliary layer. When **sdi_aux_id[ i ]** is equal to 2, the i-th layer is also referred to as a depth auxiliary layer.

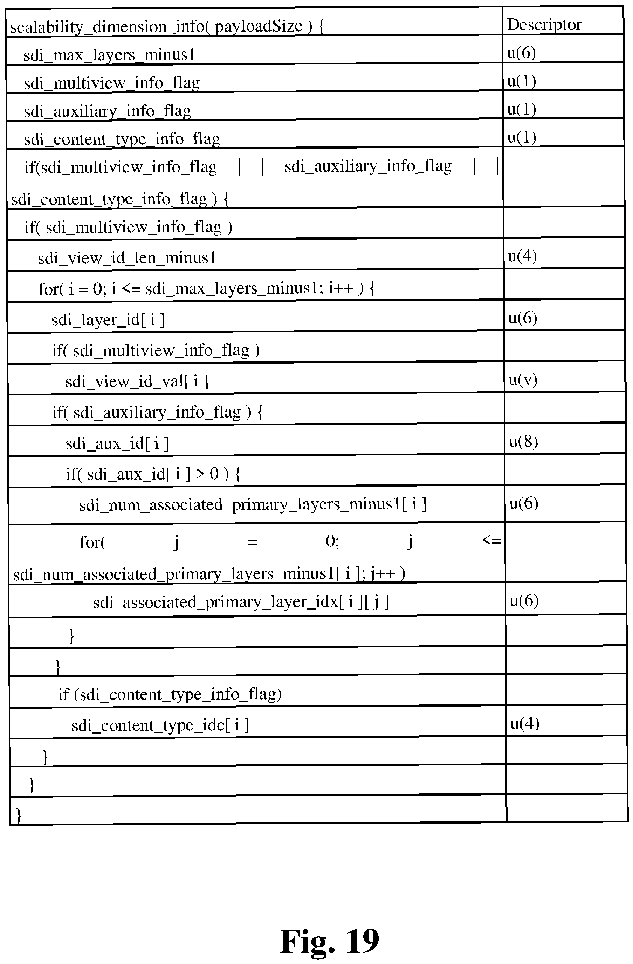

In some embodiments, illustrates in **Figure 19****,** the single layer video data information may be signalled as a Scalability Dimension Information (SDI) SEI message as defined in VVC that may be extended to include a content type parameter.

The syntax element **sdi_aux_id** [ i ] equal to 0 indicates that the i-th layer in the current CVS does not contain auxiliary pictures. sdi_aux_id[ i ] greater than 0 indicates the type of auxiliary pictures in the i-th layer in the current CVS as specified in Table 15. When sdi auxiliary_info flag is equal to 0, the value of sdi_aux_id[ i ] is inferred to be equal to 0.

Table 5 provides mapping of **sdi_aux_id[ i ]** to the type of auxiliary pictures.

The syntax element **sdi_content_type_info_flag** equal to 1 indicates that one or more layers in the current CVS may be layers that carry specific content, as defined by the semantics of **sdi_content_type_idc[ i ]**.

The syntax element **sdi_content_type_idc[ i ]** specifies the content type for the i-th layer in the current CVS. The value of **sdi_content_type_idc[ i ]** shall be in the range of 0 to 15, inclusive. When **sdi_content_type_idc[ i ]** is not present, its value is unspecified.

Table 6 provides examples of values of the syntax element **sdi_content_type_idc**[ i ].

**Table 6**

| **sdi_content_type_idc**[ i ] **value** | **Content type description** |
|---|---|
| 0 | The CVS represents a depth map sequence. |
| 1 | The CVS represents a disparity sequence. |
| 2 | The CVS represents alpha channel sequence. |
| 3 | The CVS represents an infra-red sequence. |
| 4 | The CVS represents an object mask sequence. |
| 5 | The CVS represents a semantic mask sequence. |
| 6 | The CVS represents a transparency map sequence. |
| 7 | The CVS represents a confidence map sequence. |
| 8-10 | reserved |
| 11-15 | Unspecified and left for usage by external specifications. |

In some embodiments, the similar approach than in HEVC can be used as SPS also exists in VVC, i.e. the content type parameter may be signalled in a SPS at the sequence level. Just the position of the information may differ to adapt to the SPS syntax of VVC.

In some embodiments, single-layer video data information may be signalled as a content type parameter in a Scalability dimension information SEI message. VVC uses the same system of SEI message as HEVC. So a content type information SEI message for VVC can be deduced from the content type information SEI message as illustrated in **Figure 14** for HEVC.

Conversion between depth map format and video picture format is required when the internal format of the encoded video picture is not a mono-channel picture but a multi-channel picture. In practice, conversion can be chosen if the receiving devices do not support the decoding of mono-channel video. At the time of writing, hardware decoder are generally not supporting mono-channel video/images and conversion is needed.

In some embodiments, conversion may use the luma channel (Y) of a multi-channel video picture and dummy values for the chroma channels (for instance Cb and Cr).

If m(i,j) are the samples of the depth map, the samples of the converted multi-channel picture y(i,j), cb(i,j) and cr(i,j) may be defined as follows:
Y: y(i,j) = m(i,j)
Cb: cb(i,j) = 1 << ( bit_depth_chroma - 1 )
Cr: cr(i,j) = 1 << ( bit_depth_chroma - 1 )

This conversion is used the HEVC/H.265 video coding standard (and possibly in other specifications): when AuxId[ IId ] is equal to AUX_ALPHA or AUX_DEPTH, either of the following applies:
- **chroma_format_idc** is equal to 0 in the active SPS for the layer with **nuh_layer_id** equal to **IId.**
- the value of all decoded chroma samples is equal to 1 << ( BitDepthC - 1 ) in all video pictures that have **nuh_layer_id** equal to **IId** and for which this VPS RBSP is the active VPS RBSP.

In a 4:4:4 video picture format, the three channels, luma and two chroma channels, have the same spatial resolution, as a result, in some embodiments, the three channels may be used as sub-range of the same video picture.

For example, a depth map may have a bit depth of 24 bits and the encoded video picture format is 4:4:4 8 bits per channel. In this case, one may apply masking and then shifting to retrieve first, second and third parts of the 24 bits values and store them in each channel as follows:
Y: y(i,j) = (m(i,j) & 0xFF0000) >> 16
Cb: cb(i,j) = (m(i,j) & 0x00FF00) >> 8
Cr: cr(i,j) = m(i,j) & 0x0000FF

For other picture formats, e.g. 4:2:0, 4:2:2, etc, the chroma channels have a spatial resolution different from the luma (Y) channel.

For such cases, different ways may be defined to mapping the mono-channel to the multi-channel. For example, the mono-channel image may be converted to an image in a colour space (e.g. RGB, HSL) and then the convertex image may be further converted to the encoded video picture format (e.g. YCbCr traditionally used in video coding standards such as in AVC, HEVC, VVC, etc..)

Other examples of such conversion exists, including in the domain of depth map coding (https://sites.google.com/site/brainrobotdata/home/depth-image-encoding) and depth image compression by colorization.

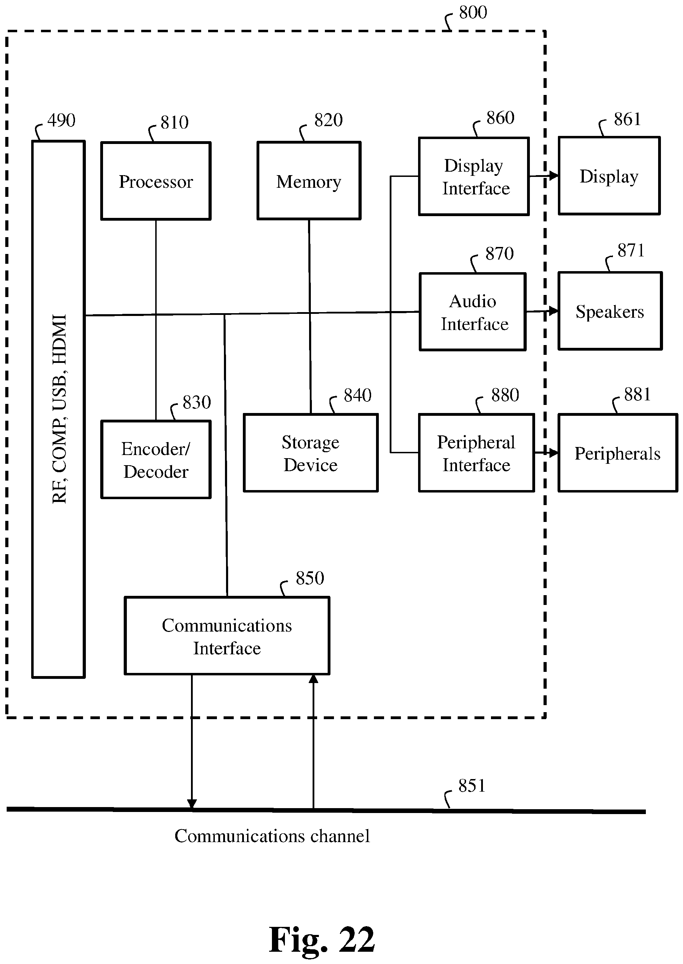

**Figure 22** shows a schematic block diagram illustrating an example of a system 800 in which various aspects and exemplary embodiments are implemented.

System 800 may be embedded as one or more devices including the various components described below. In various exemplary embodiments, system 800 may be configured to implement one or more of the aspects described in the present disclosure.

Examples of equipment that may form all or part of the system 800 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 800, singly or in combination, may be embodied in a single integrated circuit (IC), multiple ICs, and/or discrete components. For example, in at least one exemplary embodiment, the processing and encoder/decoder elements of system 800 may be distributed across multiple ICs and/or discrete components. In various exemplary embodiments, system 800 may be communicatively coupled to other similar systems, or to other electronic devices, via, for example, a communications bus or through dedicated input and/or output ports.

System 800 may include at least one processor 810 configured to execute instructions loaded therein for implementing, for example, the various aspects described in the present disclosure. Processor 810 may include embedded memory, input output interface, and various other circuitries as known in the art. System 800 may include at least one memory 820 (for example a volatile memory device and/or a non-volatile memory device). System 800 may include a storage device 840, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 840 may include an internal storage device, an attached storage device, and/or a network accessible storage device, as non-limiting examples.

System 800 may include an encoder/decoder module 830 configured, for example, to process data to provide encoded/decoded video picture data, and the encoder/decoder module 830 may include its own processor and memory. The encoder/decoder module 830 may represent module(s) that may be included in a device to perform the encoding and/or decoding functions. As is known, a device may include one or both encoding and decoding modules. Additionally, encoder/decoder module 830 may be implemented as a separate element of system 800 or may be incorporated within processor 810 as a combination of hardware and software as known to those skilled in the art.

Program code to be loaded onto processor 810 or encoder/decoder 830 to perform the various aspects described in the present disclosure may be stored in storage device 840 and subsequently loaded onto memory 820 for execution by processor 810. In accordance with various exemplary embodiments, one or more of processor 810, memory 820, storage device 840, and encoder/decoder module 830 may store one or more of various items during the performance of the processes described in the present disclosure. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 810 and/or the encoder/decoder module 830 may be used to store instructions and to provide working memory for processing that may be performed during encoding or decoding.

In other exemplary embodiments, however, a memory external to the processing device (for example, the processing device may be either the processor 810 or the encoder/decoder module 830) may be used for one or more of these functions. The external memory may be the memory 820 and/or the storage device 840, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 800 may be provided through various input devices as indicated in block 890. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present disclosure is implemented in the automotive domain.

In various exemplary embodiments, the input devices of block 890 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 800 to other electronic devices across USB and/or HDMI connections. It is to be understood that various aspects of input processing, for example, Reed-Solomon error correction, may be implemented, for example, within a separate input processing IC or within processor 810 as necessary. Similarly, aspects of USB or HDMI interface processing may be implemented within separate interface ICs or within processor 810 as necessary. The demodulated, error corrected, and demultiplexed stream may be provided to various processing elements, including, for example, processor 810, and encoder/decoder 830 operating in combination with the memory and storage elements to process the data stream as necessary for presentation on an output device.

Various elements of system 800 may be provided within an integrated housing. Within the integrated housing, the various elements may be interconnected and transmit data therebetween using suitable connection arrangement 890, for example, an internal bus as known in the art, including the I2C bus, wiring, and printed circuit boards.

The system 800 may include communication interface 850 that enables communication with other devices via communication channel 851. The communication interface 850 may include, but is not limited to, a transceiver configured to transmit and to receive data over communication channel 851. The communication interface 850 may include, but is not limited to, a modem or network card and the communication channel 851 may be implemented, for example, within a wired and/or a wireless medium.

Data may be streamed to system 800, in various exemplary embodiments, using a Wi-Fi network such as IEEE 802.11. The Wi-Fi signal of these exemplary embodiments may be received over the communications channel 851 and the communications interface 850 which are adapted for Wi-Fi communications. The communications channel 851 of these exemplary embodiments may be typically connected to an access point or router that provides access to outside networks including the Internet for allowing streaming applications and other over-the-top communications.

Other exemplary embodiments may provide streamed data to the system 800 using a set-top box that delivers the data over the HDMI connection of the input block '90.

Still other exemplary embodiments may provide streamed data to the system 800 using the RF connection of the input block 890.

The streamed data may be used as a way for signaling information used by the system 800. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 800 may provide an output signal to various output devices, including a display 861, speakers 871, and other peripheral devices 881. The other peripheral devices 881 may include, in various examples of exemplary embodiments, one or more of a stand-alone DVR, a disk player, a stereo system, a lighting system, and other devices that provide a function based on the output of system 800.

In various exemplary embodiments, control signals may be communicated between the system '00 and the display 861, speakers 871, or other peripheral devices 881 using signaling such as AV.Link (Audio/Video Link), CEC (Consumer Electronics Control), or other communications protocols that enable device-to-device control with or without user intervention.

The output devices may be communicatively coupled to system 800 via dedicated connections through respective interfaces 860, 870, and 880.

Alternatively, the output devices may be connected to system 800 using the communications channel 851 via the communications interface 850. The display 861 and speakers 871 may be integrated in a single unit with the other components of system 800 in an electronic device such as, for example, a television.

In various exemplary embodiments, the display interface 860 may include a display driver, such as, for example, a timing controller (T Con) chip.

The display 861 and speaker 871 may alternatively be separate from one or more of the other components, for example, if the RF portion of input 890 is part of a separate set-top box. In various exemplary embodiments in which the display 861 and speakers 871 may be external components, the output signal may be provided via dedicated output connections, including, for example, HDMI ports, USB ports, or COMP outputs.

In **Figures 1-21**, various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 840 (**Figure 9**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 810 or by hardware, or by a combination of hardware and software. As a non-limiting example, the exemplary embodiments may be also implemented by one or more integrated circuits. The memory 820 may be of any type appropriate to the technical environment and may be implemented using any appropriate data storage technology, such as optical memory devices, magnetic memory devices, semiconductor-based memory devices, fixed memory, and removable memory, as non-limiting examples. The processor 810 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present disclosure, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment.

Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present disclosure. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present disclosure. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present disclosure are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present disclosure are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this disclosure, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present disclosure.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present disclosure may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this disclosure.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present disclosure may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this disclosure may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure.

## Claims

1. A method (100) of encoding depth image sequence in a single-layer bitstream, wherein the method comprises:
- obtaining (110) depth representation information defining information used to obtain a depth map sequence based on depth image sequence;
- obtaining (120) the depth map sequence by coding the depth image sequence based on the depth representation information;
- encoding (130) the depth map sequence and the depth representation information in a single-layer bitstream.

2. The method of claim 1, wherein the method further comprises encoding (140) in the single-layer bitstream, a single-layer video data information indicating the single-layer bitstream is a single-layer bitstream containing depth map sequence.

3. A method of decoding depth image sequence from a single-layer bitstream, wherein the method comprises:
- decoding (210) a depth map sequence from the single-layer bitstream; and
- decoding (220) from the single-layer bitstream, depth representation information defining information used to obtain depth image sequence based on decoded depth map sequence.

4. The method of claim 3, wherein the method further comprises obtaining (230) the depth image sequence from the decoded depth map sequence based on the decoded depth representation information.

5. The method of claim 3 or 4, wherein the method further comprises decoding (step 230) from the single-layer bitstream, a single-layer video data information indicating the bitstream is a single-layer bitstream containing depth map sequence.

6. The method of one of claims 1 to 5, wherein the depth representation information comprises a minimum value and a maximum value of the depth image sequence.

7. The method of one of claims 2 or 5, wherein single-layer video data information is a depth flag.

8. The method of claim 7, wherein the depth flag is signalled in a parameter set at the sequence level.

9. The method of claim 7, wherein the depth flag is signalled as a depth map sequence supplemental enhancement information message.

10. The method of claim 2 or 4, wherein the single-layer video data information is a particular value of a content type parameter.

11. The method of claim 10, wherein the content type parameter is signalled in a parameter set at the sequence level.

12. The method of claim 10, wherein the content type parameter is signalled as a content type information supplemental enhancement information message.

13. The method of claim 12, wherein the content type information supplemental enhancement information message further comprises a syntax element that specifies a type of mapping between a depth map format and a video picture format.

14. The method of one of claims 1 to 6, wherein the depth representation information is signalled as a primary depth representation information supplemental enhancement information message.

15. The method of claim 2 or 4, wherein single-layer video data information is signalled in a scalability dimension information supplemental enhancement information message.

16. The method of claim 2 or 4, wherein single-layer video data information is signalled as a content type parameter in a Scalability dimension scalability information supplemental enhancement information message.

17. A bitstream formatted according to a method of one of claims 1-2 or 6-16.

18. A system comprising means for performing one of the method of any one of claims 1 to 16.

19. A computer program product including instructions which, when the program is executed by one or more processors, causes the one or more processors to carry out a method claimed in any one of claims 1 to 16.
